# EUROPÄISCHE PATENTSCHRIFT

(11) **EP 3 230 418 B1**
(45) Veröffentlichungstag und Bekanntmachung des Hinweises auf die Patenterteilung: **05.02.2020**
(21) Anmeldenummer: 15820451.1
(22) Anmeldetag: 09.12.2015
(51) Int. Cl.: C10M 147/00, C10M 149/14, C08F 14/26, C08F 291/00

(54) **VERFAHREN ZUR HERSTELLUNG VON MODIFIZIERTEN PTFE-FESTSCHMIERSTOFFEN**
PROCESS FOR THE PRODUCTION OF MODIFIED PTFE SOLID LUBRICANTS
PROCÉDÉ DE PRODUCTION DES LUBRIFIANTS SOLIDES À BASE DE PTFE MODIFIÉ

(30) Priorität: 12.12.2014 DE 102014225672
(43) Veröffentlichungstag der Anmeldung: 18.10.2017
(73) Patentinhaber: Leibniz-Institut für Polymerforschung Dresden e.V., 01069 Dresden (DE)
(72) Erfinder: LEHMANN, Dieter, 01640 Coswig (DE)
(74) Vertreter: Rauschenbach, Marion
(86) Internationale Anmeldenummer: PCT/EP2015/079094
(87) Internationale Veröffentlichungsnummer: WO 2016/091938

(56) Entgegenhaltungen:
- DD-A1- 116 626
- DE-A1- 10 351 812

## Beschreibung

Die Erfindung bezieht sich auf das Gebiet der Polymerchemie und betrifft ein Verfahren zur Herstellung von modifizierten PTFE-Festschmierstoffen, die beispielsweise als Additive eingesetzt werden können oder das Basismaterial für ÖI-PTFE-Dispersionen, Fette und Schmierstoffpasten, die als Spezialschmierstoffe und auch als Festschmierstoff für beispielsweise Öl-freie Getriebe in den Einsatzgebieten Maschinenbau, Fahrzeugtechnik, Luft- und Raumfahrt eingesetzt werden können, bilden.

Bekannt sind Compounds aus Polyamid- und Perfluoralkylsubstanz(en) und Mischungen dieser Compounds mit weiteren Polymersubstanz(en), bei denen die modifizierten Perfluoralkylsubstanz(en) mit Polyamid-Verbindung(en) in Schmelze über eine reaktive Umsetzung homogenisiert werden (DE 198 23 609 A1).

Weiterhin bekannt sind modifizierte Perfluor-Kunststoffe, die aus unter Sauerstoffeinfluss strahlenchemisch und/oder plasmachemisch modifizierten Perfluorpolymeren bestehen, deren Oberfläche gleichzeitig -COOH- und/oder -COF-Gruppen und reaktive Perfluoralkyl-(peroxy-)Radikal-Zentren aufweisen, wobei über einige oder alle Gruppen und/oder an einige oder alle Zentren durch nachfolgende Reaktionen weitere niedermolekulare und/oder oligomere und/oder polymere Substanzen und/oder olefinisch ungesättigte Monomere und/oder olefinisch ungesättigte Oligomere und/oder olefinisch ungesättigte Polymere oder deren Gemische gekoppelt sind (DE 103 51 812 A1).

Ebenso bekannt sind modifizierte Perfluor-Kunststoffe, die aus strahlenchemisch und/oder plasmachemisch und/oder thermomechanisch modifizierten Perfluorpolymeren und niedermolekularen und/oder oligomeren und/oder polymeren Verbindungen jeweils mit mindestens einer Hydroxygruppe in Form von Phenolgruppen und/oder Hydroxyarylgruppen und/oder Hydroxyalkylgruppen und/oder mindestens einer phenolischen und mindestens einer aliphatischen Hydroxygruppe am Arylrest bestehen, die in einer Pulver- oder Pasten- oder Schmelzeverarbeitung unter Scherbedingungen reaktiv umgesetzt sind und die niedermolekularen und/oder oligomeren und/oder polymeren Di- und/oder Polyhydroxyaryl-Verbindungen über Etherbindungen chemisch an die Perfluorpolymere gekoppelt sind (DE 10 2010 038 286).

Die Patentschrift DD116626 beschreibt die Umsetzung von strahlenchemisch modifiziertem PTFE mit Aminen oder Harnstoffen.

Nachteilig bei den Lösungen des Standes der Technik ist, dass zur Herstellung von modifizierten PTFE-Festschmierstoffen immer erst PTFE-Dispersionen oder Compounds hergestellt und diese Produkte nachfolgend durch eine aufwändige Abtrennung der überschüssigen Komponente(n) separiert werden müssen. Durch die elektrostatische Aufladung und Feinverteilung z.B. der modifizierten PTFE-Partikel in einer Dispersion oder auch der Feinverteilung der modifizierten PTFE-Partikel in Compounds ist die Abtrennung der modifizierten PTFE-Festprodukte oft sehr schwierig und kostenaufwändig, insbesondere dadurch, dass durch die Manipulationen während und nach der Separation beispielsweise Agglomeratbildung und Kompaktierung der Festprodukte auftreten, die sich bei einer späteren (Weiter-)Verarbeitung nur schwer wieder rückgängig machen lassen und sich dadurch negativ auf die Produkteigenschaften auswirken.

Aufgabe der vorliegenden Erfindung ist es, modifizierte PTFE-Festschmierstoffe anzugeben, die sich leichter handhaben und dosieren lassen und gut weiterverarbeitbar sind, und ein einfaches und kostengünstiges Verfahren zu deren Herstellung.

Die Aufgabe wird durch die in den Ansprüchen angegebene Erfindung gelöst. Vorteilhafte Ausgestaltungen sind Gegenstand der Unteransprüche.

Bei dem erfindungsgemäßen Verfahren zur Herstellung von modifizierten PTFE-Festschmierstoffen werden PTFE-Mikropulver mit Carbonylfuorid- und/oder Carbonsäure- und/oder Perfluoralkylengruppen als funktionellen Gruppen mit mindestens einer niedermolekularen und/oder oligomeren Verbindung mit mindestens einer reaktiven oder thermisch reaktivierbaren und/oder durch einen Katalysator aktivierbaren -NH-Gruppe in einem Verhältnis von 100 g PTFE-Mikropulver zu < 100 mmol niedermolekularer und/oder oligomerer Verbindung gemischt und in einem Kneter und/oder Extruder durch Feststoffumsetzung unter Scherung bei Temperaturen < 350 °C bei Verweilzeiten von < 10 Minuten reaktiv umgesetzt.

Vorteilhafterweise wird das PTFE-Mikropulver mit der niedermolekularen und/oder oligomeren Verbindung im Verhältnis 100 g PTFE-Mikropulver zu < 50 mmol niedermolekularer und/oder oligomerer Verbindung, vorteilhafterweise im Verhältnis 100 g PTFE-Mikropulver zu ≤ 10 mmol niedermolekularer und/oder oligomerer Verbindung eingesetzt.

Ebenfalls vorteilhafterweise wird als PTFE-Mikropulver strahlenchemisch und/oder plasmachemisch modifiziertes PTFE-Mikropulver oder mittels hochenergetischer, elektromagnetischer Strahlung, wie Elektronen- und/oder Gamma- und/oder Röntgenstrahlung, modifiziertes PTFE-Mikropulver eingesetzt.

Weiterhin vorteilhafterweise wird mit einer Strahlendosis von > 100 kGy, vorteilhafterweise von 250 bis 10.000 kGy, und besonders vorteilhafterweise von 500 bis 2.000 kGy, modifiziertes PTFE-Mikropulver eingesetzt.

Und auch vorteilhafterweise wird als PTFE-Mikropulver PTFE-Emulsionspolymere und/oder PTFE-Suspensionspolymere und/oder PTFE-Regenerat/Recyclat/Abfall ohne partikuläre und/oder faserförmige Inhaltsstoffe > 1 µm (größer 1 Mikrometer) eingesetzt.

Ebenfalls vorteilhaft ist es, wenn als niedermolekulare und/oder oligomere Verbindungen
- primäre und/oder sekundäre Amino-Verbindungen und/oder Amid-Verbindungen aus primären Aminen und/oder
- unsubstituierte Imid-Verbindungen (d.h. mit -CO-NH-CO-Gruppe) und/oder
- unsubstituierte und/oder monosubstituierte Sulfonamid-Verbindungen (mit -SO₂NH₂ und/oder -SO₂NHR und/oder
- unsubstituierte Sulfonimid-Verbindungen (-SO₂-NH-SO₂-) und/oder
- unsubstituierte Carbonsäuresulfimide (-CO-NH-SO₂-) und/oder
- Urethan-Verbindungen und/oder
- Harnstoff-Verbindungen mit mindestens einer NHR-Gruppe mit R = H oder einem aliphatischen Rest im Molekül und/oder
- unsubstituierte Imin-Verbindungen (mit C=NH)
- unsubstitutierte und/oder primäre und/oder sekundäre Ammonium-Verbindungen und/oder
- niedermolekulare und/oder oligomere aliphatische und/oder teilaromatische Amid- Verbindungen (ausgenommen sind Polyamidverbindungen) und/oder
- Dicyandiamid-Verbindungen und/oder
- Guanidin-Verbindungen (und/oder deren nichtexplosiven Salze wie Guanidiniumcarbonat) und/oder Guanidinderivate (wie beispielsweise Guanin, Guanosin, Arginin, Kreatin und Kreatinin) und/oder
- Melamin
   eingesetzt werden.

Weiterhin vorteilhaft ist es, wenn als niedermolekulare und/oder oligomere Verbindungen Hexamethylendiamin, Oleylamin, oligomeres Polyethylenimin, oligomeres Polyamidamin, Cystamin-dihydrochlorid, Cysteaminhydrochlorid, ε-Caprolactam, Hexamethylen(mono-/di-)acetamid, oligomere PA-6-, PA66- und/oder PA12-Verbindungen, Taurin (vorzugsweise silyliert als NH₂-CH₂-CH₂-SO₃-SiMe₃), Aminomethylphosphonsäure (vorzugsweise silyliert als NH₂-CH₂-PO[O-SiMe₃]₂), 4-Aminobenzolsulfonsäure (vorzugsweise silyliert als NH₂-Ph-SO₃-SiMe₃), 4-Aminobenzolsulfonamid, Toluolsulfonamid, Benzol-1,3-disulfonamid, Aminopropyltriethoxysilan, Ammoniumcarbonat, Harnstoff, Guanidiniumcarbonat, Dicyandiamid, Melamin eingesetzt werden.

Und auch vorteilhaft ist es, wenn das Mischen und die mechanische Beanspruchung als eine Scherbeanspruchung aufgebracht werden.

Ebenfalls von Vorteil ist es, wenn die reaktive Umsetzung mit der Temperung der modifizierten PTFE-Festschmierstoffe bis 8 Stunden im Temperaturbereich bis 350 °C, vorzugsweise bei Temperaturen < 300 °C und noch vorteilhafterweise bei Temperaturen bis 250 °C, abgeschlossen wird.

Weiterhin von Vorteil ist es, wenn die reaktive Umsetzung und die Temperung unter Schutzgas durchgeführt werden.

Mit der erfindungsgemäßen Lösung wird es erstmals möglich, modifizierte PTFE-Festschmierstoffe anzugeben, die sich leichter handhaben und dosieren lassen und gut weiterverarbeitbar sind, und durch ein einfaches und kostengünstiges Verfahren herstellbar sind.

Erreicht wird dies durch ein Verfahren zur Herstellung von modifizierten PTFE-Festschmierstoffen, bei dem PTFE-Mikropulver mit Carbonylfuorid- und/oder Carbonsäure- und/oder Perfluoralkylengruppen als funktionelle Gruppen mit mindestens einer niedermolekularen und/oder oligomeren Verbindung mit mindestens einer reaktiven oder thermisch reaktivierbaren und/oder durch einen Katalysator aktivierbaren -NH-Gruppe gemischt und reaktiv umgesetzt werden.

Als PTFE-Mikropulver können strahlenchemisch und/oder plasmachemisch modifiziertes PTFE-Mikropulver oder mittels hochenergetischer, elektromagnetischer Strahlung, wie Elektronen- und/oder Gamma- und/oder Röntgenstrahlung, modifiziertes PTFE-Mikropulver, mit einer Strahlendosis von > 100 kGy, vorteilhafterweise von 250 bis 10.000 kGy, und besonders vorteilhafterweise von 500 bis 2.000 kGy, modifiziertes PTFE-Mikropulver, eingesetzt werden.
Ebenso können als PTFE-Mikropulver PTFE-Emulsionspolymere und/oder PTFE-Suspensionspolymere und/oder PTFE-Regenerat/Recyclat/Abfall ohne partikuläre und/oder faserförmige Inhaltsstoffe (Füll- und/oder Verstärkungsstoffe) eingesetzt werden.
Als funktionelle Gruppen des PTFE-Mikropulvers liegen Carbonylfuorid- und/oder Carbonsäure- und/oder Perfluoralkylen-/Perfluorolefin-Gruppen vor. Es können auch zusätzlich Perfluoralkyl-(peroxy-)Radikale vorliegen, die während der reaktiven Umsetzung thermisch zu -COF- (Carbonylfluorid-) und/oder Perfluoralkylen-/Perfluorolefin-Gruppen (weiter-)reagieren und so zusätzlich für die Kopplungsreaktion mit der -NH-Gruppe zur Verfügung stehen.

Als niedermolekulare und/oder oligomere Verbindungen werden Verbindungen wie beispielsweise
- primäre und/oder sekundäre Amino-Verbindungen und/oder Amid-Verbindungen aus primären Aminen und/oder
- unsubstituierte Imid-Verbindungen (d.h. mit -CO-NH-CO-Gruppe) und/oder
- unsubstituierte und/oder monosubstituierte Sulfonamid-Verbindungen (mit -SO₂NH₂ und/oder -SO₂NHR und/oder
- unsubstituierte Sulfonimid-Verbindungen (-SO₂-NH-SO₂-) und/oder
- unsubstituierte Carbonsäuresulfimide (-CO-NH-SO₂-) und/oder
- Urethan-Verbindungen und/oder
- Harnstoff-Verbindungen mit mindestens einer -NHR-Gruppe mit R = H oder einem aliphatischen Rest im Molekül und/oder
- unsubstituierte Imin-Verbindungen (mit C=NH) und/oder
- unsubstitutierte und/oder primäre und/oder sekundäre Ammonium-Verbindungen und/oder
- niedermolekulare und/oder oligomere aliphatische und/oder teilaromatische Amid-Verbindungen (ausgenommen sind Polyamidverbindungen) und/oder-Dicyandiamid-Verbindungen und/oder
- Guanidin-Verbindungen (und/oder deren nichtexplosiven Salze wie Guanidiniumcarbonat) und/oder Guanidinderivate (wie beispielsweise Guanin, Guanosin, Arginin, Kreatin und Kreatinin) und/oder
- Melamin
eingesetzt, die mindestens noch eine weitere funktionelle Gruppe gleicher oder unterschiedlicher Art und/oder mindestens eine olefinisch ungesättigte Doppelbindung im Molekül besitzen.
Vorteilhafterweise können als niedermolekulare und/oder oligomere Verbindung Hexamethylendiamin, Oleylamin, oligomeres Polyethylenimin, oligomeres Polyamidamin, Cystamin-dihydrochlorid, Cysteaminhydrochlorid, ε-Caprolactam, Hexamethylen-(mono-/di-)acetamid, oligomere PA6-, PA66- und/oder PA12-Verbindungen, Taurin (vorzugsweise silyliert als NH₂-CH₂-CH₂-SO₃-SiMe₃), Aminomethylphosphonsäure (vorzugsweise silyliert als NH₂-CH₂-PO[O-SiMe₃]₂), 4-Aminobenzolsulfonsäure (vorzugsweise silyliert als NH₂-Ph-SO₃-SiMe₃), 4-Aminobenzolsulfonamid, Toluolsulfonamid, Benzol-1,3-disulfonamid, Aminopropyltriethoxysilan, Ammoniumcarbonat, Harnstoff, Guanidiniumcarbonat, Dicyandiamid, Melamin eingesetzt werden. Die Aufzählung der vorteilhaften niedermolekularen und/oder oligomeren Verbindungen ist nur beispielhaft und nicht vollzählig. Ferner können die Substanzen vorteilhaft als Reinsubstanz oder auch als Gemisch eingesetzt werden, wobei der Fachmann weiß, welche Substanzen ohne unerwünschte Nebenreaktionen miteinander gemischt werden können und welche nicht.

Erfindungsgemäß werden die PTFE-Mikropulver und die niedermolekularen und/oder oligomeren Verbindungen in einem Verhältnis von 100 g PTFE-Mikropulver zu < 100 mmol niedermolekularer und/oder oligomerer Verbindung, vorteilhafterweise im Verhältnis 100 g PTFE-Mikropulver zu < 50 mmol niedermolekularer und/oder oligomerer Verbindung, noch vorteilhafterweise im Verhältnis 100 g PTFE-Mikropulver zu ≤ 10 mmol niedermolekularer und/oder oligomerer Verbindung eingesetzt.

Die reaktive Umsetzung erfolgt erfindungsgemäß in einem Kneter und/oder Extruder durch Feststoffumsetzung unter Scherung bei Temperaturen < 350 °C bei Verweilzeiten von < 10 Minuten.

Als Bestandteil und Abschluss der reaktiven Umsetzung der PTFE-Mikropulver mit den niedermolekularen und/oder oligomeren Verbindungen kann vorteilhafterweise eine Temperung der erhaltenen modifizierten PTFE-Festschmierstoffe innerhalb weniger Minuten (z.B. 1 bis 10 min) bei hohen Temperaturen bis 350 °C und bis 8 Stunden in einem Temperaturbereich, vorzugsweise bei Temperaturen < 300 °C und noch vorteilhafterweise bei Temperaturen bis 250 °C, durchgeführt werden. Die Temperung und auch die gesamte reaktive Umsetzung kann vorteilhafterweise unter Schutzgas durchgeführt werden.

Modifizierte PTFE-Festschmierstoffe werden vorteilhafterweise mit dem erfindungsgemäßen Verfahren hergestellt und sind PTFE-Mikropulver mit Carbonylfuorid- und/oder Carbonsäure- und/oder Perfluoralkylengruppen als funktionelle Gruppen, die mit mindestens einer niedermolekularen und/oder oligomeren Verbindung mit mindestens einer reaktiven oder thermisch reaktivierbaren und/oder durch einen Katalysator aktivierbaren -NH-Gruppe in einem Verhältnis von 100 g PTFE-Mikropulver zu < 100 mmol niedermolekularer und/oder oligomerer Verbindung in einem Kneter und/oder Extruder durch Feststoffumsetzung unter Scherung reaktiv umgesetzt worden sind und bei denen das PTFE-Mikropulver mit den niedermolekularen und/oder oligomeren Verbindungen über die Carbonylfuorid- und/oder Carbonsäure- und/oder Perfluoralkylengruppen als funktionelle Gruppen am PTFE und die NH-Gruppen an den niedermolekularen und/oder oligomeren Verbindungen über chemische Amino- und/oder Amid-Bindungen kovalent gekoppelt sind.

Ein Vorteil der erfindungsgemäßen Lösung besteht darin, dass einerseits niedermolekulare und/oder oligomere Verbindungen über -NH-Gruppen an die Carbonylfuorid- und/oder Carbonsäure- und/oder Perfluoralkylengruppen als funktionelle Gruppen des PTFE-Mikropulvers gekoppelt werden können, dass aber je nach entstehender Struktur diese Kopplungsgruppen zwischen dem PTFE und der niedermolekularen und/oder oligomeren Verbindung auch nach der reaktiven Umsetzung zumindest teilweise weiterhin aktiv für Folge- und/oder Kopplungsreaktionen sind.
Solche durch die Kopplung entstehenden aktiven Gruppen können beispielsweise bei der Reaktion von Ammoniak und/oder primären Aminen und/oder unsubstituierten und/oder monosubstituierten Ammonium-Verbindungen und/oder unsubstituierten Sulfonamiden mit Perfluoralkylengruppen in einer Michael-analogen Reaktion entstehen. In einer thermisch und/oder durch Scherung (über das Freilegen der sterisch gehinderten Reaktionszentren am PTFE) initiierten Reaktion der -COF- und/oder -COOH- und/oder perfluorolefinischen/Perfluoralkylen-Gruppen und/oder von Gruppen, die an der PTFE-Partikeloberfläche thermisch initiiert beispielsweise durch Decarboxylierung und/oder Dehydrohalogenierung entstehen, wie z.B. PerfluoralkylenGruppen, mit der -NH-Gruppe der niedermolekularen und/oder oligomeren Verbindungen entstehen chemisch modifizierte PTFE-Partikeloberflächen, an die über eine C-N-C- und/oder C-N-S-Bindungen (ein Ausnahmefall ist die Kopplung von NH₃ und/oder unsubstituiertem Ammoniumsalz zu C-NH₂) die niedermolekularen und/oder oligomeren Verbindungen chemisch über kovalente Bindungen gekoppelt sind/vorliegen. In der C-N-C-Bindung kann der Stickstoff der niedermolekularen und/oder oligomeren Verbindungen entweder direkt über eine Reaktion der N-H-Gruppe an die Perfluoralkylkette durch beispielsweise eine Addition an Perfluoralkylengruppen des PTFE oder über eine PTFE-Carbonylgruppe (durch Reaktion mit den funktionellen - COF- und -COOH-Gruppen am PTFE) gebunden vorliegen. In der C-N-S-Bindung kann der Stickstoff der niedermolekularen und/oder oligomeren Sulfonamid- und/oder Sulfonimid-Verbindungen entweder direkt über eine Reaktion der -NH- Gruppe an die Perfluoralkylkette durch beispielsweise eine Addition an Perfluoralkylengruppen des PTFE oder über eine PTFE-Carbonylgruppe (durch Reaktion mit den funktionellen - COF- und -COOH-Gruppen am PTFE) gebunden vorliegen.

Bekannt ist, dass strahlen- und/oder plasmamodifizierte PTFE-(Mikro-)Pulver Carbonylfuorid- und/oder Carbonsäure- und/oder Perfluoralkylengruppen und persistente Perfluor-(peroxy-)radikale besitzen. Bekannt ist auch, dass thermomechanisch abgebaute PTFE-Mikropulver reaktive Zentren besitzen und in Schmelze mit Nukleophilen koppeln. Weiterhin bekannt ist, dass die funktionellen Gruppen, Radikale und reaktiven Zentren größtenteils durch PTFE- Ketten abgedeckt, d.h. sterisch gehindert und somit nicht direkt für Reaktionen zugänglich sind.
Die Herstellung von chemisch modifizierten PTFE-Additiven mit funktionellen Gruppen, die für die Modifizierung dieser PTFE-Produkte mit weiteren funktionellen Gruppen in Folge- oder Kopplungsreaktionen oder die in Schmierstoffen, wie ÖI-PTFE-Dispersionen, Fetten, Pasten oder direkt als Festschmierstoffpulver als substratspezifische Haft- und Kopplungsgruppen eingesetzt werden können, durch eine reaktive Umsetzung von strahlen- und/oder plasmamodifizierten und/oder thermomechanisch modifizierten PTFE-(Mikro-)Pulvern, d.h. eine reaktive Kopplung/Oberflächenmodifizierung von PTFE-Mikropulverpartikeln mit niedermolekularen und/oder oligomeren Verbindungen, die mindestens noch eine weitere funktionelle Gruppe gleicher oder unterschiedlicher Art und/oder mindestens eine olefinisch ungesättigte Doppelbindung für, dem Fachmann bekannte Folge- oder Kopplungsreaktionen im Molekül besitzen und/oder mindestens noch eine weitere funktionelle Gruppe gleicher oder unterschiedlicher Art für die Fixierung auf Substratoberflächen, wie Kunststoff oder Keramik oder Metall/Metalloxid, besitzen und/oder die Kopplungsgruppe zwischen dem PTFE und der niedermolekularen und/oder oligomeren Verbindung, die nach der Reaktion mit dem PTFE weiter aktiv für Folge- und/oder Kopplungsreaktionen bleibt, in einer Pulver- oder Pastenverarbeitung, wobei die Pulververarbeitung bevorzugt wird, ist nicht bekannt.

Die direkt als Amin an das PTFE gekoppelten Verbindungen liegen hydrolysestabil gebunden vor. Die als Amid- oder Imid-Derivat oder als Sulfonamid oder Sulfonimid-Derivat gekoppelten Verbindungen weisen eine hohe Hydrolysestabilität auf, was auf die wasserabweisende Wirkung des PTFE und die sterische Hinderung an der Kopplungsstelle am PTFE zurückgeführt wird.
Bindungen des Stickstoffs der N-H-Gruppe der niedermolekularen und/oder oligomeren Verbindungen direkt mit der Perfluoralkylkette des PTFE entstehen durch thermische und mechanische oder durch mechanische Beanspruchung (Scherung) initiierte Substitutionsreaktionen mit aktivierten Halogenatomen oder gleichwertigen Abgangsgruppen oder durch eine Michael-analoge Additionsreaktion mit perfluorolefinischen Gruppen, den Perfluoralkylengruppen am PTFE. Diese Reaktionen können auch bei Anwendung von erhöhten Temperaturen thermisch initiiert werden und die Reaktivität während der reaktiven Umsetzung verbessern.
Perfluorolefinische Gruppen sind im strahlenchemisch und/oder plasmachemisch modifizierten PTFE in niedrigen Konzentrationen im PTFE vorhanden. Solche Gruppen können ohne sterische Hinderung an der Korn-/Partikeloberfläche aufgrund der hohen Reaktivität über eine Additionsreaktion sofort, beispielsweise mit Wassermolekülen, reagieren, die dann während der reaktiven Umsetzung thermisch über Eliminierungsreaktionen aktivierbare Gruppen bilden. Während der reaktiven Umsetzung des PTFE als Pulver- oder Paste werden vorzugsweise in-situ thermisch generierte Gruppen, vorzugsweise Perfluoralkylengruppen erzeugt und in-situ mit den -NH-Gruppen der niedermolekularen und/oder oligomeren Verbindungen umgesetzt. Dies kann vorteilhaft in einem Kneter oder Extruder erfolgen, indem das strahlenchemisch- und/oder plasmachemisch modifizierte PTFE-(Mikro-)Pulver mit Carbonylfluorid- und/oder Carbonsäuregruppen und/oder thermisch aktivierbaren Gruppen und persistenten Perfluor-(peroxy-)radikalen und/oder thermomechanisch modifizierte PTFE-(Mikro-)Pulver mit thermisch aktivierbaren Gruppen mit der -NH-Gruppe der niedermolekularen und/oder oligomeren Verbindungen unter Scherung innig gemischt/in Kontakt und zur Reaktion gebracht wird.

Speziell modifizierte PTFE-Festschmierstoffe als Additive besitzen Interesse als Ausgangsstoff für eine Reihe von Schmierstoffen, wie ÖI-PTFE-Dispersionen, Fetten, Pasten und auch als Pulver-Festschmierstoff. Solche modifizierten PTFE-Produkte werden erfindungsgemäß in einem Direktmodifizierungsverfahren durch eine reaktive Umsetzung unter mechanischer Beanspruchung unter einer Scherbeanspruchung in Knetern und/oder Extrudern, vorzugsweise in einem

Doppelschneckenextruder oder Planetenwalzen-Extruder, hergestellt. In diesem Direktmodifizierungsverfahren werden die erfindungsgemäß modifizierten PTFE-Festschmierstoff-Produkte als Feststoffpulver durch reaktive Umsetzung von PTFE-Mikropulver mit niedermolekularen und/oder oligomeren Verbindungen mit -NH-Gruppen im Unterschuss, d.h. im Verhältnis PTFE zu niedermolekularer und/oder oligomerer Verbindung von 100 g zu < 100 mmol und vorzugsweise 100 g zu < 50 mmol und bevorzugt von 100 zu ≤ 10 mmol umgesetzt. Der Einsatz von niedermolekularen und/oder oligomeren Verbindungen mit -NH-Gruppen ist abhängig von der Konzentration der funktionellen Gruppen am PTFE, die IR-spektroskopisch leicht ermittelt werden können. Die optimalen Einsatzverhältnisse können in wenigen Versuchen ermittelt werden.

Die reaktive Umsetzung wird bevorzugt unter Schutzgas wie Reinststickstoff oder Argon durchgeführt. Als PTFE-Mikropulver können PTFE-Mikropulver aus PTFE-Primärware, wie PTFE-Emulsionspolymere und/oder PTFE-Suspensionspolymere, und/oder Sekundärmaterial, wie PTFE-Regenerat ohne Inhaltsstoffe/Füllstoffe oder ohne partikuläre Inhaltsstoffe/Füllstoffe > 1 Mikrometer und/oder ohne faserförmige Inhaltsstoffe/Verstärkungsstoffe > 1 Mikrometer, dies heißt, partikuläre, faserförmige oder andere Inhaltsstoffe/Füllstoffe ≤ 1 µm können vorhanden sein. Als Inhaltsstoffe/Füllstoffe können MoS₂ (Molybdändisulfid), Ruß, Grafit und/oder Nanostoffe/Nanomaterialien, wie beispielsweise Bornitrid, Siliziumcarbid, Diamantstaub, CNT (carbon nanotubes) und Graphen vorhanden sein, und vorzugsweise können PTFE-Emulsionspolymere zur chemischen Kopplung, eingesetzt werden. Bevorzugt eingesetzt werden PTFE-Mikropulver, die strahlenchemisch und/oder plasmachemisch modifiziert sind. Die strahlenchemische Modifizierung erfolgt durch hochenergetische elektromagnetische und/oder Teilchenstrahlung, wie Gamma- und/oder Röntgenstrahlung und/oder Elektronen-Strahlung. Bevorzugt werden strahlenchemisch modifizierte PTFE-Mikropulver mit Bestrahlungsdosen > 100 kGy und vorzugsweise im Bereich 250 bis 10.000 kGy und besonders bevorzugt von 500 bis 2.000 kGy und/oder plasmachemisch modifizierte PTFE-Mikropulver eingesetzt.

Überraschenderweise konnte festgestellt werden, dass bei der reaktiven Umsetzung der Materialien mit Verweilzeiten von < 10 Minuten und auch < 3 Minuten bei einer Feststoffumsetzung unter Scherung bei Temperaturen < 350 °C und vorzugsweise < 300 °C und ganz bevorzugt im Temperaturbereich ≤ 250 °C und nach Abtrennung von nichtgekoppelten niedermolekularen und/oder oligomeren Verbindungen chemischanalytisch über IR-Spektroskopie eine Kopplung der niedermolekularen und/oder oligomeren Verbindungen mit dem PTFE stattgefunden hat. Die Reaktionstemperaturen während der reaktiven Umsetzung sind entsprechend der thermischen Stabilität der eingesetzten niedermolekularen und/oder oligomeren Verbindungen mit -NH-Gruppen auszuwählen und die optimalen Temperatur-Zeit-Bedingungen für die reaktive Umsetzung können in wenigen Versuchen ermittelt werden. Es ist vorteilhaft, dass als Bestandteil der reaktiven Umsetzung eine Temperung der PTFE-Mikropulver zur Nachreaktion im Temperaturbereich bis 300 °C und vorzugsweise 200 bis 270 °C angeschlossen wird. Vorteilhaft werden die reaktive Umsetzung und/oder die Temperung unter Schutzgas, wie Argon oder Reinststickstoff durchgeführt. Es ist auch vorteilhaft, wenn die erfindungsgemäßen PTFE-Festschmierstoffe unter Schutzgas gelagert werden.

Vorteilhaft ist auch, wenn die niedermolekularen und/oder oligomeren -NH-Verbindungen silyliert/mit Trimethylsilan-Gruppen aktiviert als -N(SiMe₃)-Verbindungen bei der Umsetzung mit PTFE-Mikropulver mit allgemein Carbonsäurehalogenid- und speziell mit PTFE-Carbonylfluoridgruppen und/oder mit PTFE-Mikropulver mit unter Reaktionsbedingungen eliminierbaren und/oder substitutierbaren Halogenatomen und speziell Fluoratomen an der PTFE-Molekülkette eingesetzt werden. Weiterhin vorteilhaft ist, dass thermisch weniger stabile und/oder polare funktionelle Gruppen mit Schutzgruppen modifiziert werden, beispielsweise mit Carbonsäure-, Sulfonsäure-, Phosphonsäure- und/oder Phosphorsäure-Gruppen modifizierte PTFE-Festschmierstoffe silyliert/mit -SiMe₃-Gruppen und/oder als Salz, beispielsweise als Ammoniumsalz modifiziert einzusetzen.

Mit den modifizierten PTFE-Festschmierstoffen als Additiv in Festsubstanz stehen Konzentrate für vielfältige Anwendungen im Schmierstoffbereich bis hin als Festschmierstoffkomponente in Öl-freien Getrieben zur Verfügung. Ferner besitzen diese modifizierten PTFE-Festschmierstoffe als Additive ein besonderes Potenzial für die Realisierung von Einlauf- und Notlaufeigenschaften.
Zur Verarbeitung der erfindungsgemäß modifizierten PTFE-Festschmierstoffe zu Dispersionen, Fetten und Pasten werden die üblichen Verfahren angewandt. So können ÖI-PTFE-Dispersionen aus diesen erfindungsgemäßen modifizierten PTFE-Additiven verfahrenstechnisch nach DE 10 2007 055 927 und DE 10 2011 083 076 hergestellt werden. Fette und Pasten werden nach kommerziellen Verfahren der Fett- und Pastenherstellung realisiert. Besitzen die erfindungsgemäß modifizierten PTFE-Festschmierstoffe polare funktionelle Gruppen, so ist es vorteilhaft solche Gruppen mit Schutzgruppen zu modifizieren, beispielsweise silyliert/mit -SiMe₃-Gruppen modifiziert einzusetzen.

Die modifizierten PTFE-Festschmierstoffe üben in Fetten und Pasten gleichzeitig die Funktion eines Verdickers aus und gewährleisten die Minimierung von Energieverlusten durch Reibung und Verschleiß.
Die mit polaren funktionellen Gruppen, beispielsweise mit Carbonsäure-, Sulfonsäure-, Phosphonsäure- und/oder Phosphorsäure-Gruppen modifizierten PTFE-Festschmierstoffe, die vorzugsweise silyliert/mit -SiMe₃-Gruppen und/oder als Salz eingesetzt werden, lagern sich bevorzugt auf Metall-(oxid-)Oberflächen an und reagieren unter Kopplung mit der Oberfläche, was Brugger- und VKA-Untersuchungen allgemein belegen. Unter den Bedingungen der Festkörperreibung wird zwar das Öl beispielsweise im Fett oder der Paste aus dem Spalt verdrängt, jedoch senken die fixierten PTFE-Partikel mit den antiadhäsiven Eigenschaften als Festschmierstoffkomponente im Reibspalt Reibung und Verschleiß. Zusätzlich wirken die funktionellen Gruppen im PTFE unter Druck zwischen den Komponentenoberflächen, so dass sich vorteilhaft in der Reibfläche ein chemisch gekoppelter, gleitreibungsvermittelnder PTFE-Film ausbildet.

Der Vorteil der erfindungsgemäßen Lösung besteht auch darin, dass die modifizierten PTFE-Festschmierstoffe als Additive vorzugsweise als Mikropulverfestprodukt in einem Direktverfahren durch Pulverextrusion auf kommerzieller Technik hergestellt werden können. Die Herstellung solcher modifizierten PTFE-Festschmierstoffe muss nicht über aufwändige Synthesen beispielsweise in Dispersion oder Polymerschmelze erfolgen, aus denen die modifizierten PTFE-Festschmierstoffe wieder abgetrennt werden müssen.

Nachfolgend wird die Erfindung an mehreren Ausführungsbeispielen näher erläutert.

### Beispiel 1

In einen Haake-Laborkneter werden bei 100 °C und 100 U/min 50 g PTFE-Mikropulver Zonyl® MP1100 (DuPont, strahlenchemisch modifiziert durch Elektronenbestrahlung mit ca. 500 kGy) und anschließend 8 mmol ε-Caprolactam gegeben und mit 100 U/min gemischt. In die teilgefüllte Kneterkammer werden zu dieser Vormischung noch 45 g PTFE- Mikropulver Zonyl® MP1100 zugegeben.

Nachdem die Knetertemperatur auf 220 °C erhöht wurde, wird die Mischung 5 min mit 100 U/min gemischt. Danach wird die Knetertemperatur auf 250 °C erhöht und die Mischung 5 min mit 100 U/min gemischt.
Das entstandene gemischte Festprodukt wird entnommen und abgefüllt.

2 g des Festproduktes werden mit Aceton benetzt und anschließend werden 50 ml destilliertes Wasser zugegeben und gerührt. Diese Dispersion wird 20 Minuten bei 50 °C gerührt, abfiltriert und mit destilliertem Wasser gewaschen. Mit diesem Feststoff wird diese Extraktion weitere 4 Mal durchgeführt. Abschließend wird der Filterrückstand mit Aceton gewaschen, getrocknet und mittels IR-Spektroskopie charakterisiert. Die IR-Absorptionen des extrahierten Feststoffes werden nach der Basislinienkorrektur mittels der CF₂-Absorption bei 2365 cm⁻¹ zum PTFE-Ausgangsprodukt auf 1,0 normiert.

Nach der Extraktion wurde im IR-Spektrum die CH₂-Absorptionsbanden des ε-Caprolactams am PTFE-Ausgangsprodukt bei 2934 cm⁻¹ mit 0,5 und bei 2860 cm⁻¹ mit 0,40 detektiert, was auf die reaktive Kopplung in dieser Feststoff-Umsetzung hinweist. Zur Herstellung einer Fettmasse, in der der extrahierte Feststoff gleichzeitig als Festschmierstoff und Verdicker fungiert, werden 5 g der extrahierten Feststoffes in einem Mörser mit 2 g PAO-8 (Polyalphaolefin) verrieben, bis eine mittelviskose Paste entsteht. Die abschließende Homogenisierung dieser Fettmasse wird auf einem kommerziellen Walzenstuhl durchgeführt. Die cremeartige Fettmasse ist visuell ein homogenes Fettprodukt mit einer guten Streichfähigkeit.

### Beispiel 2

In einen Haake-Laborkneter werden bei 80 °C und 100 U/min 50 g PTFE-Mikropulver Zonyl® MP1200 (DuPont, strahlenchemisch modifiziert durch Elektronenbestrahlung mit ca. 500 kGy) und anschließend 10 mmol 3-Aminopropyltriethoxysilan gegeben und gemischt. Nach ca. 1 min werden zu dieser Vormischung in die teilgefüllte Kneterkammer noch 45 g PTFE-Mikropulver Zonyl® MP1200 zugegeben. Nachdem die Knetertemperatur auf 200 °C erhöht wurde, wird die Mischung 5 min mit 100 U/min gemischt. Das entstandene gemischte Festprodukt wird entnommen und abgefüllt und die Gefäßatmosphäre für die Lagerung gegen Reinststickstoff ausgetauscht.

2 g des Festproduktes werden in 50 ml absolutem Alkohol 20 Minuten bei 50 °C gerührt und abfiltriert. Mit diesem Feststoff wird diese Extraktion weitere 4 Mal durchgeführt. Abschließend wird der Filterrückstand abfiltriert, getrocknet und mittels IR-Spektroskopie charakterisiert. Die IR-Absorptionen des extrahierten Feststoffes werden nach der Basislinienkorrektur mittels der CF₂-Absorption bei 2365 cm⁻¹ zum PTFE-Ausgangsprodukt auf 1,0 normiert.
Nach der Extraktion wurden im IR-Spektrum die CH₃- und CH₂-Absorptionsbanden des 3-Aminopropyltriethoxysilans am PTFE detektiert, was auf die reaktive Kopplung in dieser Feststoff-Umsetzung hinweist.

### Beispiel 3

In einen Haake-Laborkneter werden bei 80 °C und 100 U/min 50 g PTFE-Mikropulver Zonyl® MP1100 (DuPont, strahlenchemisch modifiziert durch Elektronenbestrahlung mit ca. 500 kGy) und anschließend 40 mmol Taurin gegeben und gemischt. Nach ca. 1 min werden zu dieser Vormischung in die teilgefüllte Kneterkammer noch 45 g PTFE-Mikropulver Zonyl® MP1100 zugegeben. Nachdem die Knetertemperatur auf 200 °C erhöht wurde, wird die Mischung 3 min mit 100 U/min gemischt. Danach wird die Knetertemperatur auf 250 °C erhöht und die Mischung 7 min mit 100 U/min gemischt. Das entstandene gemischte Festprodukt wird entnommen und abgefüllt.

2 g des Feststoffes werden wie in Beispiel 1 gereinigt und mittels IR- Spektroskopie charakterisiert. Nach der Extraktion wurden im IR-Spektrum neben den PTFE-Absorptionsbanden die charakteristischen Absorptionsbanden des Taurins am PTFE detektiert, was auf die reaktive Kopplung in dieser Feststoff-Umsetzung hinweist.

Zur Herstellung einer Fettmasse, in der der Feststoff gleichzeitig als Festschmierstoff und Verdicker fungiert, werden 8 g des vom Überschuss an Taurin gereinigten Feststoffes in einem Mörser mit 2 g PAO-8 (Polyalphaolefin) verrieben, bis eine viskose Paste entsteht.

Die abschließende Homogenisierung dieser Fettmasse wird auf einem kommerziellen Walzenstuhl durchgeführt. Die cremeartige Fettmasse ist visuell ein homogenes Fettprodukt mit einer guten Streichfähigkeit.

Fettherstellung und Prüfung auf dem VKA-Teststand:
In ein Basismaterial aus PAO (Polyalphaolefin) und PE-Wachs werden 3 Ma.-% des vom Überschuss an Taurin gereinigten Feststoffes mittels Zahnscheibenrührer/Disperser im Temperaturbereich von 150 bis 160 °C eingearbeitet. Als zusätzliches Dispergieraggregat wurde in der Schmelze bei 130 °C ein Ultra-Turrax mit Drehzahlen von 15.000 U/min zugeschaltet.
In VKA-Untersuchungen wurden von dem mit 3 Ma.-% Feststoff-modifizierten Basismaterial eine Verschweißkraft von 3000 N und ein Verschleiß von 0,85 mm im Vergleich zum reinen Basismaterial mit einer Verschweißkraft von 1400 N und einem Verschleiß von 1,55 mm ermittelt.

### Beispiel 4

In einen Haake-Laborkneter werden bei 80 °C und 100 U/min 50 g PTFE-Mikropulver TF 2025 (3M/Dyneon, strahlenchemisch nachträglich mit 700 kGy Gammastrahlung modifiziert) und anschließend 80 mmol Melamin gegeben und gemischt. Nach ca. 1 min werden zu dieser Vormischung in die teilgefüllte Kneterkammer noch 45 g TF2025 zugegeben. Nachdem die Knetertemperatur auf 250 °C erhöht wurde, wird die Mischung 5 min mit 100 U/min gemischt. Das entstandene gemischte Festprodukt wird entnommen und abgefüllt.

2 g des Feststoffes werden wie in Beispiel 1 gereinigt und mittels IR-Spektroskopie charakterisiert. Nach der Extraktion wurden im IR-Spektrum die Absorptionsbanden des Melamins am PTFE detektiert, was auf die reaktive Kopplung in dieser Feststoff-Umsetzung hinweist.

### Beispiel 5

In einen Haake-Laborkneter werden bei 80 °C und 100 U/min 50 g PTFE-Mikropulver Zonyl® MP1100 (DuPont, strahlenchemisch modifiziert durch Elektronenbestrahlung mit ca. 500 kGy) und anschließend 20 mmol Toluolsulfonamid gegeben und gemischt. Nach ca. 1 min werden zu dieser Vormischung in die teilgefüllte Kneterkammer noch 45 g PTFE-Mikropulver Zonyl® MP1100 zugegeben. Nachdem die Knetertemperatur auf 220 °C erhöht wurde, wird die Mischung 2 min mit 100 U/min gemischt. Das entstandene gemischte Festprodukt wird entnommen und abgefüllt.

2 g des Feststoffes werden wie in Beispiel 2 gereinigt und mittels IR-Spektroskopie charakterisiert. Nach der Extraktion wurden im IR-Spektrum die charakteristischen Toluolsulfonamid-Absorptionsbanden am PTFE detektiert, was auf die reaktive Kopplung in dieser Feststoff-Umsetzung hinweist.

### Beispiel 6

In einen Haake-Laborkneter werden bei 80 °C und 100 U/min 50 g PTFE-Mikropulver (hergestellt aus MoS₂-modifizierten PTFE-Abfallspänen, die zerkleinert mit 700 kGy Gamma-bestrahlt und anschließend vermahlen wurden) und anschließend 30 mmol Taurin gegeben und gemischt. Nach ca. 1 min werden zu dieser Vormischung in die teilgefüllte Kneterkammer noch 45 g des gleichen PTFE-Mikropulvers zugegeben. Nachdem die Knetertemperatur auf 250 °C erhöht wurde, wird die Mischung 5 min mit 100 U/min gemischt. Das entstandene gemischte Festprodukt wird entnommen und abgefüllt.

2 g des Feststoffes werden wie in Beispiel 1 gereinigt und mittels IR-Spektroskopie charakterisiert. Nach der Extraktion wurden im IR-Spektrum die charakteristischen Taurin-Absorptionsbanden am PTFE detektiert, was auf die reaktive Kopplung in dieser Feststoff-Umsetzung hinweist.
Analog Beispiel 3 wird eine Fettmasse hergestellt, die eine ähnliche Konsistenz aufweist.

### Beispiel 7

In einen Haake-16mm-Doppelschnecken-Laborextruder wird bei 100 U/min und dem Temperaturprofil Einzug 80 °C - 250 °C - 250 °C - Düse 220 °C die Mischung aus PTFE-Mikropulver Zonyl® MP1100 (DuPont, strahlenchemisch modifiziert durch Elektronenbestrahlung mit ca. 500 kGy) und ε-Caprolactam (Zonyl® MP1100, vorgemischt mit ε-Caprolactam im Verhältnis 100 g zu 10 mmol) mit 1,0 kg/h dosiert. Der erhaltene Feststoff wird nach Austritt aus der Düse in einem Gefäß mit flüssigem Stickstoff aufgefangen. Nach Abdampfen/Verflüchtigen des Stickstoffs, wird der Feststoff abgefüllt.

2 g des Feststoffs werden wie in Beispiel 1 gereinigt und mittels IR-Spektroskopie charakterisiert. Nach der Extraktion wurden im IR-Spektrum die CH₂-Absorptionsbanden des ε-Caprolactams am PTFE analog zu Beispiel 1 detektiert, was auf die reaktive Kopplung in dieser Feststoff-Umsetzung hinweist.

### Beispiel 8

In einen Haake-16mm-Doppelschnecken-Laborextruder wird bei 100 U/min und dem Temperaturprofil Einzug 80 °C - 250 °C - 250 °C - Düse 220 °C die Mischung aus PTFE-Mikropulver Zonyl® MP1100 (DuPont, strahlenchemisch modifiziert durch Elektronenbestrahlung mit ca. 500 kGy) und Taurin (Zonyl® MP1100, vorgemischt mit Taurin im Verhältnis von 100 g zu 50 mmol) mit 1,0 kg/h dosiert. Der erhaltene Feststoff wird nach Austritt aus der Düse in einem Gefäß mit flüssigem Stickstoff aufgefangen. Nach Abdampfen/Verflüchtigen des Stickstoffs, wird der Feststoff abgefüllt.

2 g des Feststoffs werden wie in Beispiel 1 gereinigt und mittels IR-Spektroskopie charakterisiert. Nach der Extraktion wurden im IR-Spektrum die Taurin-Absorptionsbanden analog zu Beispiel 3 detektiert, was auf die reaktive Kopplung in dieser Feststoff-Umsetzung hinweist.

### Beispiel 9

In einen Haake-16mm-Doppelschnecken-Laborextruder wird bei 100 U/min und dem Temperaturprofil Einzug 80 °C - 250 °C - 250 °C - Düse 220 °C die Mischung aus PTFE-Mikropulver Zonyl® MP1100 (DuPont, strahlenchemisch modifiziert durch Elektronenbestrahlung mit ca. 500 kGy) und Melamin (Zonyl® MP1100, vorgemischt mit Melamin im Verhältnis 100 g zu 25 mmol) mit 1,0 kg/h dosiert. Der erhaltene Feststoff wird nach Austritt aus der Düse in einem Gefäß mit flüssigem Stickstoff aufgefangen. Nach Abdampfen/Verflüchtigen des Stickstoffs, wird der Feststoff abgefüllt.

2 g des Feststoffs werden wie in Beispiel 1 gereinigt und mittels IR- Spektroskopie charakterisiert. Nach der Extraktion wurden im IR-Spektrum die charakteristischen Melamin-Absorptionsbanden am PTFE analog zum Beispiel 4 detektiert, was auf die reaktive Kopplung in dieser Feststoff-Umsetzung hinweist.

### Beispiel 10

In einen Haake-16mm-Doppelschnecken-Laborextruder wird bei 100 U/min und dem Temperaturprofil Einzug 80 °C - 250 °C - 230 °C - Düse 180 °C die Mischung aus PTFE-Mikropulver Zonyl® MP1100 (DuPont, strahlenchemisch modifiziert durch Elektronenbestrahlung mit ca. 500 kGy) und Hexamethylendiamin (Zonyl® MP1100, vorgemischt mit Hexamethylendiamin (HMDA) im Verhältnis 100 g zu 5 mmol) mit 1,0 kg/h dosiert. Der erhaltene Feststoff wird nach Austritt aus der Düse in einem Gefäß mit flüssigem Stickstoff aufgefangen. Nach Abdampfen/Verflüchtigen des Stickstoffs, wird der Feststoff abgefüllt und die überstehende Gefäßatmosphäre gegen Reinststickstoff ausgetauscht.

2 g des Feststoffs werden wie in Beispiel 2 gereinigt und mittels IR- Spektroskopie charakterisiert. Nach der Extraktion wurden im IR-Spektrum die charakteristischen Hexamethylendiamin-Absorptionsbanden am PTFE detektiert, was auf die reaktive Kopplung in dieser Feststoff-Umsetzung hinweist.

### Beispiel 11

In einen Haake-16mm-Doppelschnecken-Laborextruder wird bei 100 U/min und dem Temperaturprofil Einzug 80 °C - 250 °C - 250 °C - Düse 200 °C die Mischung aus PTFE-Mikropulver Zonyl® MP1100 (DuPont, strahlenchemisch modifiziert durch Elektronenbestrahlung mit ca. 500 kGy) und Oligoamid-6-Pulver (Zonyl® MP1100, vorgemischt mit Oligoamid-6-Pulver (hergestellt nach DD 276 290 mit einem Mₙ^{theor.}= 1000, COOH-terminiert, gemahlen) im Verhältnis 100 g zu 5 mmol) mit 1,0 kg/h dosiert. Der erhaltene Feststoff wird nach Austritt aus der Düse in einem Gefäß mit flüssigem Stickstoff aufgefangen. Nach Abdampfen/Verflüchtigen des Stickstoffs, wird der Feststoff abgefüllt.

2 g des Feststoffs werden in 50 ml Ameisensäure 20 Minuten bei 50 °C gerührt, abfiltriert und mit Methanol gewaschen. Mit diesem Feststoff wird diese Extraktion weitere 4 Mal durchgeführt. Abschließend wird der Feststoff abfiltriert, mit Methanol gewaschen, getrocknet und mittels IR-Spektroskopie charakterisiert. Die IR-Absorptionen des extrahierten Feststoffs werden nach der Basislinienkorrektur mittels der CF₂-Absorption bei 2365 cm⁻¹ zum PTFE- Ausgangsprodukt auf 1,0 normiert. Nach der Extraktion wurden im IR-Spektrum neben den CH₂-Absorptionsbanden die Amidabsorptionen des Oligoamid-6 am PTFE detektiert, was auf die reaktive Kopplung in dieser Feststoff-Umsetzung hinweist.

## Patentansprüche

1. Verfahren zur Herstellung von modifizierten PTFE-Festschmierstoffen, bei dem PTFE-Mikropulver mit Carbonylfuorid- und/oder Carbonsäure- und/oder Perfluoralkylengruppen als funktionelle Gruppen mit mindestens einer niedermolekularen und/oder oligomeren Verbindung mit mindestens einer reaktiven oder thermisch reaktivierbaren und/oder durch einen Katalysator aktivierbaren - NH-Gruppe in einem Verhältnis von 100 g PTFE-Mikropulver zu < 100 mmol niedermolekularer und/oder oligomerer Verbindung gemischt und in einem Kneter und/oder Extruder durch Feststoffumsetzung unter Scherung bei Temperaturen < 350 °C bei Verweilzeiten von < 10 Minuten reaktiv umgesetzt werden.

2. Verfahren nach Anspruch 1, bei dem das PTFE-Mikropulver mit der niedermolekularen und/oder oligomeren Verbindung im Verhältnis 100 g PTFE-Mikropulver zu < 50 mmol niedermolekularer und/oder oligomerer Verbindung, vorteilhafterweise im Verhältnis 100 g PTFE-Mikropulver zu ≤ 10 mmol niedermolekularer und/oder oligomerer Verbindung eingesetzt wird.

3. Verfahren nach Anspruch 1, bei dem als PTFE-Mikropulver strahlenchemisch und/oder plasmachemisch modifiziertes PTFE-Mikropulver oder mittels hochenergetischer, elektromagnetischer Strahlung, wie Elektronen- und/oder Gamma- und/oder Röntgenstrahlung, modifiziertes PTFE-Mikropulver eingesetzt wird.

4. Verfahren nach Anspruch 3, bei dem mit einer Strahlendosis von > 100 kGy, vorteilhafterweise von 250 bis 10.000 kGy, und besonders vorteilhafterweise von 500 bis 2.000 kGy, modifiziertes PTFE-Mikropulver eingesetzt wird.

5. Verfahren nach Anspruch 1, bei dem als PTFE-Mikropulver PTFE-Emulsionspolymere und/oder PTFE-Suspensionspolymere und/oder PTFE-Regenerat/Recyclat/Abfall ohne partikuläre und/oder faserförmige Inhaltsstoffe > 1 µm (größer 1 Mikrometer) eingesetzt wird.

6. Verfahren nach Anspruch 1, bei dem als niedermolekulare und/oder oligomere Verbindungen
- primäre und/oder sekundäre Amino-Verbindungen und/oder Amid-Verbindungen aus primären Aminen und/oder
- unsubstituierte Imid-Verbindungen (d.h. mit -CO-NH-CO-Gruppe) und/oder
- unsubstituierte und/oder monosubstituierte Sulfonamid-Verbindungen d.h. mit -SO₂NH₂ und/oder -SO₂NHR und/oder
- unsubstituierte Sulfonimid-Verbindungen (-SO₂-NH-SO₂-) und/oder
- unsubstituierte Carbonsäuresulfimide (-CO-NH-SO₂-) und/oder
- Urethan-Verbindungen und/oder
- Harnstoff-Verbindungen mit mindestens einer NHR-Gruppe mit R = H oder einem aliphatischen Rest im Molekül und/oder
- unsubstituierte Imin-Verbindungen (mit C=NH)
- unsubstitutierte und/oder primäre und/oder sekundäre Ammonium-Verbindungen und/oder
- niedermolekulare und/oder oligomere aliphatische und/oder teilaromatische Amid- Verbindungen ausgenommen Polyamidverbindungen und/oder
- Dicyandiamid-Verbindungen und/oder
- Guanidin-Verbindungen und/oder deren nichtexplosiven Salze wie Guanidiniumcarbonat und/oder Guanidinderivate wie beispielsweise Guanin, Guanosin, Arginin, Kreatin und Kreatinin und/oder
- Melamin
eingesetzt werden.

7. Verfahren nach Anspruch 6, bei dem als niedermolekulare und/oder oligomere Verbindungen Hexamethylendiamin, Oleylamin, oligomeres Polyethylenimin, oligomeres Polyamidamin, Cystamin-dihydrochlorid, Cysteaminhydrochlorid, ε-Caprolactam, Hexamethylen(mono-/di-)acetamid, oligomere PA-6-, PA66- und/oder PA12-Verbindungen, Taurin vorzugsweise silyliert als NH₂-CH₂-CH₂-SO₃-SiMe₃, Aminomethylphosphonsäure vorzugsweise silyliert als NH₂-CH₂-PO[O-SiMe₃]₂, 4-Aminobenzolsulfonsäure vorzugsweise silyliert als NH₂-PH-SO₃-Sime₃, 4-Aminobenzolsulfonamid, Toluolsulfonamid, Benzol-1,3-disulfonamid, Aminopropyltriethoxysilan, Ammoniumcarbonat, Harnstoff, Guanidiniumcarbonat, Dicyandiamid, Melamin eingesetzt werden.

8. Verfahren nach Anspruch 1, bei dem das Mischen und die mechanische Beanspruchung als eine Scherbeanspruchung aufgebracht werden.

9. Verfahren nach Anspruch 1, bei dem die reaktive Umsetzung mit der Temperung der modifizierten PTFE-Festschmierstoffe bis 8 Stunden im Temperaturbereich bis 350 °C, vorzugsweise bei Temperaturen < 300 °C und noch vorteilhafterweise bei Temperaturen bis 250 °C, abgeschlossen wird, wobei vorteilhafterweise die reaktive Umsetzung und die Temperung unter Schutzgas durchgeführt werden.

## Claims

1. Process for producing modified PTFE solid lubricants wherein PTFE micropowder having carbonyl fluoride and/or carboxylic acid and/or perfluoroalkylene groups as functional groups is mixed with at least one low molecular weight and/or oligomeric compound having at least one reactive or thermally reactivatable and/or catalyst-activatable NH group in a ratio of 100 g of PTFE micropowder to < 100 mmol of low molecular weight and/or oligomeric compound and subjected to reactive conversion in a kneader and/or extruder by solid-state reaction under shear stress at temperatures of < 350°C at residence times of < 10 minutes.

2. Process according to Claim 1, wherein the PTFE micropowder is employed with the low molecular weight and/or oligomeric compound in a ratio of 100 g of PTFE micropowder to < 50 mmol of low molecular weight and/or oligomeric compound, advantageously in a ratio of 100 g of PTFE micropowder to ≤ 10 mmol of low molecular weight and/or oligomeric compound.

3. Process according to Claim 1, wherein the PTFE micropowder employed is a radiation- and/or plasma-modified PTFE micropowder or PTFE micropowder modified by means of high-energy electromagnetic radiation, such as electron- and/or gamma- and/or X-ray radiation.

4. Process according to Claim 3, wherein PTFE micropowder modified with a radiation dose of > 100 kGy, advantageously of 250 to 10,000 kGy and particularly advantageously of 500 to 2000 kGY is employed.

5. Process according to Claim 1, wherein the PTFE micropowder employed is selected from PTFE emulsion polymers and/or PTFE suspension polymers and/or PTFE regenerate/recyclate/waste having no particulate and/or fibrous constituents > 1 µm (larger than 1 micrometer).

6. Process according to Claim 1, wherein the low molecular weight and/or oligomeric compounds employed are
- primary and/or secondary amino compounds and/or amide compounds of primary amines and/or
- unsubstituted imide compounds (i.e. having -CO-NH-CO- group) and/or
- unsubstituted and/or monosubstituted sulfonamide compounds, i.e. comprising -SO₂NH₂ and/or -SO₂NHR
- unsubstituted sulfonimide compounds (-SO₂-NH-SO₂-) and/or
- unsubstituted carboxylic sulfimides (-SO₂-NH-SO₂-) and/or
- urethane compounds and/or
- urea compounds having at least one NHR group where R=H or an aliphatic radical in the molecule and/or
- unsubstituted imine compounds (where C=NH)
- unsubstituted and/or primary and/or secondary ammonium compounds and/or
- low molecular weight and/or oligomeric aliphatic and/or semiaromatic amide compounds, excluding polyamide compounds and/or
- dicyandiamide compounds and/or
- guanidine compounds and/or their nonexplosive salts such as guanidine carbonate and/or guanidine derivatives such as for example guanine, guanosine, arginine, creatine and creatinine and/or
- melamine.

7. Process according to Claim 6, wherein the low molecular weight and/or oligomeric compounds employed are hexamethylenediamine, oleylamine, oligomeric polyethyleneimine, oligomeric polyamidamine, cystamine dihydrochloride, cysteamine hydrochloride, ε-caprolactam, hexamethylene (mono-/di-)acetamide, oligomeric PA6, PA66 and/or PA12 compounds, taurine, preferably silylated as NH₂-CH₂-CH₂-SO₃-SiMe₃, aminomethylphosphonic acid, preferably silylated as NH₂-CH₂-PO[O-SiMe₃]₂, 4-aminobenzenesulfonic acid, preferably silylated as NH₂-Ph-SO₃-SiMe₃, 4-aminobenzenesulfonamide, toluenesulfonamide, benzene-1,3-disulfonamide, aminopropyltriethoxysilane, ammonium carbonate, urea, guanidinium carbonate, dicyandiamide, melamine.

8. Process according to Claim 1, wherein the mixing and the mechanical stress are applied as shear stress.

9. Process according to Claim 1, wherein the reactive conversion is concluded with heat treatment of the modified PTFE solid lubricants for up to 8 hours in the temperature range up to 350°C, preferably at temperatures < 300°C and even more advantageously at temperatures up to 250°C, wherein the reactive conversion and the heat treatment are advantageously performed under protective gas.

## Revendications

1. Procédé de fabrication de lubrifiants solides à base de PTFE modifié, selon lequel des micropoudres de PTFE contenant des groupes fluorure de carbonyle et/ou acide carboxylique et/ou perfluoroalkylène en tant que groupes fonctionnels sont mélangées avec au moins un composé de faible poids moléculaire et/ou oligomère contenant au moins un groupe NH réactif ou réactivable thermiquement et/ou activable par un catalyseur en un rapport de 100 g de micropoudres de PTFE pour < 100 mmoles de composé de faible poids moléculaire et/ou oligomère, et transformées réactivement dans un malaxeur et/ou une extrudeuse par réaction à l'état solide sous cisaillement à des températures < 350 °C avec des temps de séjour < 10 minutes.

2. Procédé selon la revendication 1, selon lequel la micropoudre de PTFE est utilisée avec le composé de faible poids moléculaire et/ou oligomère en un rapport de 100 g de micropoudre de PTFE pour < 50 mmoles de composé de faible poids moléculaire et/ou oligomère, avantageusement en un rapport de 100 g de micropoudre de PTFE pour ≤ 10 mmoles de composé de faible poids moléculaire et/ou oligomère.

3. Procédé selon la revendication 1, selon lequel une micropoudre de PTFE modifiée chimiquement par rayonnement et/ou chimiquement par plasma, ou une micropoudre de PTFE modifiée par un rayonnement électromagnétique de haute énergie, tel qu'un faisceau d'électrons et/ou un rayon gamma et/ou un rayon X, est utilisée en tant que micropoudre de PTFE.

4. Procédé selon la revendication 3, selon lequel une micropoudre de PTFE modifiée avec une dose de rayonnement > 100 kGy, avantageusement de 250 à 10 000 kGy et de manière particulièrement avantageuse de 500 à 2 000 kGy, est utilisée.

5. Procédé selon la revendication 1, selon lequel un polymère de PTFE en émulsion et/ou un polymère de PTFE en suspension et/ou un produit régénéré/produit recyclé/déchet de PTFE sans contenu particulaire et/ou fibreux > 1 µm (supérieur à 1 micromètre) est utilisé en tant que micropoudre de PTFE.

6. Procédé selon la revendication 1, selon lequel
- des composés amino primaires et/ou secondaires et/ou des composés d'amide d'amines primaires et/ou
- des composés d'imide non substitués (c.-à-d. contenant un groupe -CO-NH-CO) et/ou
- des composés de sulfonamide non substitués et/ou monosubstitués, c.-à-d. contenant -SO₂NH₂ et/ou -SO₂NHR, et/ou
- des composés de sulfonimide non substitués (-SO₂-NH-SO₂), et/ou
- des sulfimides d'acides carboxyliques non substitués (-CO-NH-SO₂-) et/ou
- des composés d'uréthane et/ou
- des composés d'urée contenant au moins un groupe NHR avec R = H ou un radical aliphatique dans la molécule, et/ou
- des composés d'imine non substitués (contenant C=NH),
- des composés d'ammonium non substitués et/ou primaires et/ou secondaires, et/ou
- des composés d'amide de faible poids moléculaire et/ou oligomères, aliphatiques et/ou partiellement aromatiques, à l'exclusion des composés de polyamide, et/ou
- des composés de dicyandiamide, et/ou
- des composés de guanidine et/ou leurs sels non explosifs, tels que le carbonate de guanidinium et/ou les dérivés de guanidine, tels que par exemple la guanine, la guanosine, l'arginine, la créatine et la créatinine, et/ou
- la mélamine,
sont utilisés en tant que composés de faible poids moléculaire et/ou oligomères.

7. Procédé selon la revendication 6, selon lequel l'hexaméthylène-diamine, l'oléylamine, la polyéthylèneimine oligomère, la polyamide-amine oligomère, le dichlorhydrate de cystamine, le chlorhydrate de cystéamine, l'ε-caprolactame, le (mono-/di-)acétamide d'hexaméthylène, les composés de PA-6, PA66 et/ou PA12 oligomères, la taurine, de préférence silylée sous la forme de NH₂-CH₂-CH₂-SO₃-SiMe₃, l'acide aminométhylphosphonique, de préférence silylé sous la forme de NH₂-CH₂-PO[O-SiMe₃]₂, l'acide 4-aminobenzènesulfonique, de préférence silylé sous la forme de NH₂-Ph-SO₃-SiMe₃, le 4-aminobenzène-sulfonamide, le toluènesulfonamide, le benzène-1,3-disulfonamide, l'aminopropyltriéthoxysilane, le carbonate d'ammonium, l'urée, le carbonate de guanidinium, le dicyandiamide, la mélamine sont utilisés en tant que composés de faible poids moléculaire et/ou oligomères.

8. Procédé selon la revendication 1, selon lequel le mélange et la sollicitation mécanique sont appliqués sous la forme d'une sollicitation de cisaillement.

9. Procédé selon la revendication 1, selon lequel la transformation réactive est achevée avec le conditionnement en température des lubrifiants solides à base de PTFE modifié pendant jusqu'à 8 heures dans la plage de température allant jusqu'à 350 °C, de préférence à des températures < 300 °C, et de manière encore davantage préférée à des températures de jusqu'à 250 °C, la transformation réactive et le conditionnement en température étant avantageusement réalisés sous un gaz protecteur.
